# EUROPÄISCHE PATENTSCHRIFT

(11) **EP 2 307 934 B1**
(45) Veröffentlichungstag und Bekanntmachung des Hinweises auf die Patenterteilung: **20.06.2018**
(21) Anmeldenummer: 09781421.4
(22) Anmeldetag: 03.08.2009
(51) Int. Cl.: G05B 19/042

(54) **UNIVERSELLE SCHNITTSTELLE FÜR EINEN WIRELESS ADAPTER**
UNIVERSAL INTERFACE FOR A WIRELESS ADAPTER
INTERFACE UNIVERSELLE POUR ADAPTATEUR SANS FIL

(30) Priorität: 08.08.2008 DE 102008036967
(43) Veröffentlichungstag der Anmeldung: 13.04.2011
(73) Patentinhaber: Endress+Hauser Process Solutions AG, 4153 Reinach (CH)
(72) Erfinder: PROBST, Stefan, 79576 Weil am Rhein (DE); FIEDLER, Marc, CH-4153 Reinach (CH)
(74) Vertreter: Andres, Angelika Maria
(86) Internationale Anmeldenummer: PCT/EP2009/060031
(87) Internationale Veröffentlichungsnummer: WO 2010/015601

(56) Entgegenhaltungen:
- EP-A2- 1 925 918
- WO-A1-2005/103851
- WO-A2-2005/086110
- US-A1- 2005 065 618
- US-A1- 2006 092 039
- US-A1- 2006 142 875

## Beschreibung

Die Erfindung betrifft eine universelle Schnittstelle für einen Wireless Adapter, der ein in der Automatisierungstechnik gebräuchliches Kommunikationsprotokoll unterstützt, wobei dem Wireless Adapter eine erste Energieversorgungseinheit zur Energieversorgung des Wireless Adapters und ein Funkmodul zur Kommunikation mit einer übergeordneten Steuereinheit über ein Funknetzwerk zugeordnet sind.

In der Prozessautomatisierungstechnik werden vielfach Feldgeräte eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben. Dokument EP 1 925 918 A2 offenbart ein Funkmodul, das als Schnittstelle für einen Wireless Adapter funktioniert. In modernen Industrieanlagen sind Feldgeräte in der Regel über Bussysteme (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder eine PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation® Fieldbus und HART® ist eine drahtlose Datenübertragung über Funk spezifiziert. Ferner sind Funknetzwerke für Sensoren in dem Standard IEEE 802.15.4 näher spezifiziert. Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Stromquelle als integrale Bestandteile auf. Dabei können die Funkeinheit und die Sromquelle in dem Feldgerät selbst oder in einem dauerhaft an dem Feldgerät angeschlossenen Funkmodul vorgesehen sein. Durch die Stromquelle wird eine autarke Energieversorgung des Feldgerätes ermöglicht.

Daneben besteht die Möglichkeit, Feldgeräte ohne Funkeinheiten - also die installierte Basis - durch die Kopplung mit jeweils einem Wireless Adapter, der eine Funkeinheit aufweist, zu einem Funk-Feldgerät aufzurüsten. Ein entsprechender Wireless Adapter ist beispielsweise in der Druckschrift WO 2005/103851 A1 beschrieben. Der Wireless Adapter wird in der Regel an eine Feldbus-Kommunikations-schnittstelle des Feldgerätes lösbar angeschlossen. Über die Feldbus-Kommunikationsschnittstelle kann das Feldgerät die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommunikationsschnittstelle an das Feldgerät weiterleiten. Die Versorgung des Feldgeräts mit elektrischer Leistung kann über eine Energieversorgungseinheit des Wireless Adapters erfolgen.

Bei autarken Funk-Feldgeräten und Wireless Adaptern wird die Kommunikation, beispielsweise mit einer übergeordneten Einheit, in der Regel über die drahtlose Schnittstelle des Funk-Feldgerätes bzw. des Wireless Adapters abgewickelt. Zusätzlich weisen solche Funk-Feldgeräte bzw. Wireless Adapter in der Regel eine drahtgebundene Kommunikationsschnittstelle auf. Beispielsweise ist in dem HART®-Standard vorgesehen, dass Funk-Feldgeräte neben einer drahtlosen Schnittstelle auch eine drahtgebundene Kommunikationsschnittstelle aufweisen müssen. Über solch eine drahtgebundene Kommunikationsschnittstelle ist beispielsweise vor Ort eine Konfiguration des Funk-Feldgerätes bzw. des Wireless Adapters über eine Service- und/oder Bedieneinheit, wie beispielsweise einen Handheld Communicator, die/der an der drahtgebundenen Kommunikationsschnittstelle angeschlossen wird, möglich. Ferner kann die drahtgebundene Kommunikationsschnittstelle als Feldbus-Kommunikationsschnittstelle ausgebildet sein, so dass die Kommunikation darüber entsprechend einem Bussystem, wie beispielsweise entsprechend einem der standardisierten Bussysteme Profibus®, Foundation® Fieldbus oder HART®, abgewickelt wird. Über solch eine Feldbus-Kommunikationsschnittstelle kann das Funk-Feldgerät bzw. der Wireless Adapter auch an einen entsprechenden drahtgebundenen Feldbus angeschlossen werden.

Die Energieversorgungseinheit bzw. die Stromquelle eines Wireless Adapters oder eines Funk-Feldgerätes ist beispielsweise eine in dem Wireless Adapter bzw. dem Funk-Feldgerät vorgesehene Batterie, eine Brennstoffzelle, eine solare Energieversorgung und/oder ein Akku.

In der installierten Basis finden sich die unterschiedlichsten Typen von Feldinstallationen: Eine Vielzahl der Feldgeräte sind als 4-20mA Feldgeräte ausgestaltet. Hier repräsentiert der analoge 4-20mA-Stromwert den Messwert. Zusätzlich kann dem Stromsignal eine digitale Kommunikation überlagert sein, die üblicherweise - was jedoch keine Beschränkung darstellt - auf dem HART Protokoll basiert. Unter den Begriff der 'Feldinstallation' lassen sich neben den Zweidraht-Feldgeräten natürlich auch Vierdraht-Feldgeräte subsumieren; weiterhin fallen unter den Begriff Bediengeräte, die beispielsweise zur Parametrierung des Wireless Adapters verwendet werden, oder auch die Verwendung des Wireless Adapters im Modembetrieb.

Ein Wireless Adapter, der zumindest für ein in der Automatisierungstechnik gebräuchliches Protokoll zur digitalen Kommunikation ausgelegt ist, ist üblicherweise auf die spezielle Feldinstallation zugeschnitten. Bei der bekannten Lösung fehlt die notwendige Flexibilität, um den Wireless Adapter bei unterschiedlichen Feldinstallationen anzuwenden. Es liegt auf der Hand, dass die herkömmlichen Lösungen daher sehr aufwändig zu realisieren sind.

Der Erfindung liegt die Aufgabe zugrunde, eine universelle Schnittstelle für einen Wireless Adapter vorzuschlagen, die flexible Anschlussmöglichkeiten unterschiedlicher Feldinstallationen an einen Wireless Adapter ermöglicht.

Die Aufgabe wird dadurch gelöst, dass an der Schnittstelle zumindest fünf Anschlussklemmen vorgesehen sind, die so ausgestaltet sind, dass in Abhängigkeit von der jeweils anzuschließenden Feldinstallation jeweils eine Teilmenge der Anschlussklemmen entweder mit unterschiedlichen Ausgestaltungen von Feldgeräten oder mit einem Bediengerät verbindbar ist. Unter dem Begriff 'Feldinstallation' sind die unterschiedlich ausgelegte Typen von Feldgeräten zu verstehen, also Zweidraht- oder Vierdraht-Feldgeräte; erfindungsgemäß umfasst werden aber auch Bediengeräte, die beispielsweise zur Parametrierung des Wireless Adapters verwendet werden. Eine weitere wichtige Anwendung ist die Nutzung des Wireless Adapters im Modembetrieb. Durch Mehrfachnutzung von Anschlussklemmen bei unterschiedlichen Feldinstallationen lässt sich die Anzahl der Anschlussklemmen erheblich reduzieren bzw. minimieren. Insbesondere wird durch die innere Beschaltung der Anschlussklemmen erreicht, dass verschiedene Anschlussklemmen je nach Applikation unterschiedliche Funktionen aufweisen und in unterschiedlichen Kombinationen mit den Feldinstallationen verbunden werden. Es wird hier also ein flexibles Anschlusskonzept für einen Wireless Adapter beschrieben, das es erlaubt, unterschiedliche Sensoren/Messumformer einfach anzuschließen, bzw. den Wireless Adapter einfach in bestehende Applikationen einzubinden, bzw. vom Kunden gewünschte, spezielle Verschaltungen zu realisieren.

Eine vorteilhafte Ausgestaltung der erfindungsgemäßen Schnittstelle schlägt vor, dass es sich bei der ersten Anschlussklemme um eine Energieversorgungsklemme handelt, an die die Energieversorgungseinheit angeschlossen ist.

Darüber hinaus ist vorgesehen, dass es sich bei der zweiten Anschlussklemme um eine erste Kommunikationsklemme handelt, die die digitale Kommunikation entsprechend dem Kommunikationsprotokoll und/oder die Ermittlung des analogen Stromsignals unterstützt. Das Kommunikationsprotokoll unterstützt bevorzugt den HART Standard, da HART Feldgeräte in der Automatisierungstechnik die größte Verbreitung aufweisen. Es versteht sich von selbst, dass auch andere in der Automatisierungstechnik gebräuchliche Kommunikationsprotokolle unterstützt werden können. Ggf. sind dann weitere Anschlussklemmen vorzusehen. Beispielhaft sind neben dem HART-Protokoll, das Profibus Protokoll oder das Foundation Fieldbus Protokoll zu nennen.

Erfolgt die Messwertbestimmung konventionell mittels eines analogen Stromsignals, so wird bevorzugt das 4-20mA Signal verwendet, da sich dieser Standard in der Prozessautomatisierungstechnik durchgesetzt hat.

Gemäß einer ersten Ausgestaltung der erfindungsgemäßen Schnittstelle wird ein von der Energieversorgungseinheit des Wireless Adapters gespeistes Zweidraht-Feldgerät, bei dem die Energieversorgung und die Bereitstellung des Messwerts über dieselbe Zweidrahtleitung erfolgen, an die erste Anschlussklemme und an die zweite Anschlussklemme angeschlossen. Die Energieversorgung des Feldgeräts erfolgt in diesem Fall über die in der Schnittstelle integrierte Energieversorgungseinheit. Bei der Energieversorgungseinheit handelt es sich beispielsweise um eine Batterie, ein Solarpanel, einen Akku oder eine Brennstoffzelle.

Eine vorteilhafte Ausgestaltung der erfindungsgemäßen Schnittstelle sieht eine dritten Anschlussklemme vor, bei der es sich je nach anzuschließender Feldinstallation entweder um eine Masseklemme für eine externe Energieversorgungseinheit oder um eine Brücke handelt, die die Verbindung zur fünften Anschlussklemme herstellt, die im Nachfolgenden noch näher beschrieben wird.

Gemäß einer vorteilhaften Ausgestaltung der erfindungsgemäßen Schnittstelle ist ein Vierdraht-Feldgerät, das über eine erste Zweidrahtleitung und eine externe Energieversorgungseinheit mit Energie versorgt ist, über die zweite Anschlussklemme und die dritte Anschlussklemme mit dem Wireless Adapter verbunden. Somit werden in Abhängigkeit von der jeweiligen Feldinstallation das digitale Kommunikationssignal und/oder das den Messwert repräsentierende Stromsignal über die an der zweiten Anschlussklemme und an der dritten Anschlussklemme des Wireless Adapters angeklemmte zweite Zweidrahtleitung übertragen.

Darüber hinaus ist vorgesehen, dass es sich bei einer vierten Anschlussklemme um eine zweite Kommunikationsklemme handelt, die die digitale Kommunikation entsprechend dem jeweiligen Kommunikationsprotokoll der Feldinstallation unterstützt.

Als vorteilhaft wird es darüber hinaus angesehen, wenn die vierte Anschlussklemme zweifach ausgeführt ist bzw. wenn die beiden Anschlussklemmen funktional gleich arbeiten, da sie über eine Brücke miteinander verbunden sind.

Gemäß einer vorteilhaften Weiterbildung der erfindungsgemäßen Schnittstelle wird vorgeschlagen, dass für den Fall, dass ein Zweidraht-Feldgerät und eine externe Energieversorgungseinheit separat an den Wireless Adapter anzuschließen sind, das Zweidraht-Feldgerät an die zweite Anschlussklemme und an die vierte Anschlussklemme angeschlossen ist und dass die externe Energieversorgungseinheit mit der dritten Anschlussklemme und der vierten Anschlussklemme verbunden ist.

Weiterhin ist vorgesehen, dass es sich bei einer fünften Anschlussklemme je nach angeschlossener Feldinstallation entweder um einen hochohmigen Masseanschluss oder um eine Brücke zur dritten Anschlussklemme handelt.

Als vorteilhaft wird es im Zusammenhang mit der vorliegenden Erfindung erachtet, wenn für den Fall, dass der Wireless Adapter bei einem Zweidraht-Feldgerät für den Modembetrieb verwendet wird, die vierte Anschlussklemme und die fünfte Anschlussklemme über die beiden Kommunikationsleitungen auf die Zweidrahtleitung, die das Zweidraht-Feldgerät mit der externen Energieversorgungseinheit verbindet und über die die digitale Kommunikation erfolgt, angeschlossen ist.

Für den Fall, dass der Wireless Adapter bei einem über die externe Energieversorgungseinheit gespeisten Feldgerät im Modembetrieb arbeitet, ist vorgesehen, dass die externe Energieversorgungseinheit mit der dritten Anschlussklemme und der vierten Anschlussklemme verbunden ist, wobei die dritte Anschlussklemme und die fünfte Anschlussklemme über eine Brücke miteinander verbunden sind, und wobei das Feldgerät über die vierte Anschlussklemme und die fünfte Anschlussklemme an den Wireless Adapter angeschlossen ist.

Wie bereits gesagt, lässt das sich der Wireless Adapter über die Schnittstelle zwecks Parametrierung oder Diagnose auch mit einem Bediengerät verbinden. Hierbei wird das Bediengerät an die vierte Anschlussklemme und die fünfte Anschlussklemme angeschlossen.

Um den erfindungsgemäßen Wireless Adapter uneingeschränkt und damit auch im Explosionsgefährdeten Bereich einsetzen zu können, wird vorgeschlagen, dass jeder der Anschlussklemmen entweder eine Spannungsbegrenzung und/oder Strombegrenzung zugeordnet ist, die so ausgelegt sind, dass beim Anschluss der jeweiligen Feldinstallation an den Wireless Adapter die zur Verfügung stehende Leistung so bemessen ist, dass der Einsatz des Wireless Adapters in Verbindung mit der Feldinstallation im Explosionsgefährdeten Bereich möglich ist. insbesondere ist bei allen Applikationsmöglichkeiten der Explosionsschutz gewährleistet. Insbesondere ist auch bei fehlerhaftem Anschluss der Feldinstallation an den Wireless Adapter ausgeschlossen, dass die für den Explosionsgefährdeten Bereich maximal zulässige Leistungsübertragung überschritten wird.

Die Erfindung wird anhand der nachfolgenden Figuren näher erläutert. Es zeigt:
Fig. 1: die Belegung der Anschlussklemmen des erfindungsgemäßen Wireless Adapters im Falle des Anschlusses eines Feldgeräts, das über den Wireless Adapter mit Energie versorgt wird,
Fig. 2: die Belegung der Anschlussklemmen des erfindungsgemäßen Wireless Adapters für den Fall, dass ein Vierdraht-Feldgerät an den Wireless Adapter angeschlossen ist,
Fig. 3: die Belegung der Anschlussklemmen des erfindungsgemäßen Wireless Adapters für den Fall, dass ein Zweidraht-Feldgerät und ein externes Netzteil an den Wireless Adapter angeschlossen sind,
Fig. 4: eine erste Ausgestaltung der Belegung der Anschlussklemmen des erfindungsgemäßen Wireless Adapters für den Fall, dass der Wireless Adapter im Modembetrieb bei einem Zweidraht-Feldgerät arbeitet,
Fig. 5: eine zweite Ausgestaltung der Belegung der Anschlussklemmen des erfindungsgemäßen Wireless Adapters für den Fall, dass der Wireless Adapter im Modembetrieb bei einem Vierdraht-Feldgerät arbeitet und
Fig. 6: die Belegung der Anschlussklemmen des erfindungsgemäßen Wireless Adapters für den Fall, dass ein Bediengerät an den Wireless Adapter angeschlossen ist.

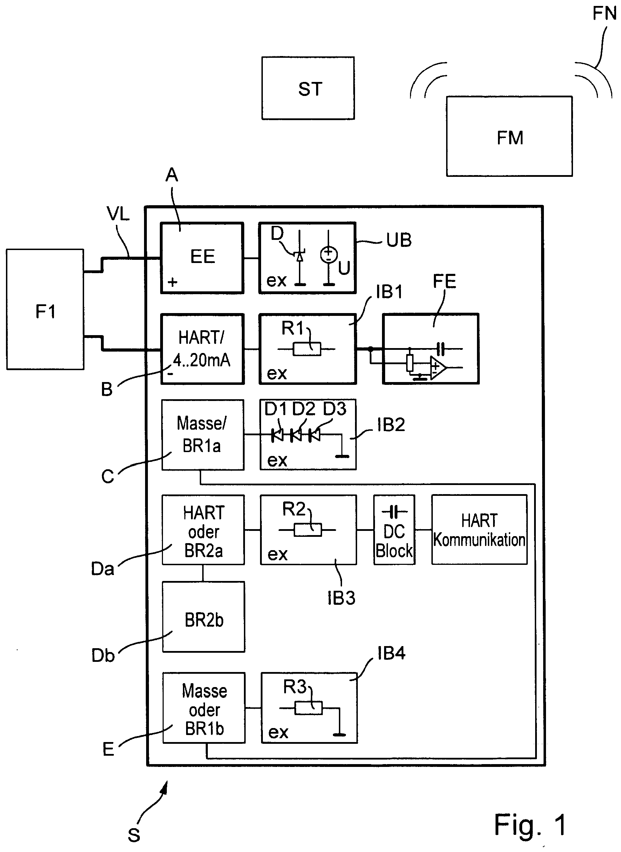

In den Figuren Fig. 1 - Fig. 6 sind die Schaltungskomponenten der Schnittstelle S des Wireless Adapters bzw. des Funkadapters jeweils identisch. Geändert ist je nach Feldinstallation die Belegung der Anschlussklemmen A, B, C, Da, Db, E. Die erfindungsgemäße Schnittstelle S ist so ausgeführt, dass die einzelnen Anschlussklemmen A, B, C, Da, Db, E in unterschiedlichen Kombinationen nutzbar sind. Damit der Wireless Adapter auch im Explosionsgeschützten Bereich zum Einsatz kommen kann, sind in den gezeigten Ausgestaltungen Vorkehrungen getroffen, die - je nach Feldinstallation - den Strom oder die Spannung auf zulässige Grenzwerte beschränken.

Die je nach angeschlossener Feldinstallation aktiven Komponenten der Schnittstelle S sind in den Figuren Fig. 1 - Fig. 6 durch eine dickere Strichstärke hervorgehoben. Es versteht sich, dass die Durchnummerierung der Anschlussklemmen A, B, C, Da, Db, E von der ersten Anschlussklemme A bis zur fünften Anschlussklemme E keine Beschränkung hinsichtlich der Anordnung oder Reihenfolge der Anschlussklemmen A, B, C, Da, Db, E an dem Wireless Adapter darstellt.

Der Wireless Adapter, der in den Figuren nicht explizit dargestellt ist, weist darüber hinaus ein Funkmodul FM auf, das die drahtlose Kommunikation mit einer übergeordneten Steuereinheit ST über das Funknetzwerk FN ermöglicht.

Fig. 1 zeigt die Belegung der Anschlussklemmen A, B, C, Da, Db, E des erfindungsgemäßen Wireless Adapters im Falle des Anschlusses eines Feldgeräts F1, das von dem Wireless Adapter mit Energie über die Energieversorgungseinheit EE versorgt wird. Die Energieversorgungseinheit EE speist auch den Wireless Adapter.

Bei dem Feldgerät F1 handelt es sich somit um ein Zweidraht-Feldgerät. Zweidraht-Feldgeräte zeichnen sich dadurch aus, dass die Energieversorgung und die Übermittlung des Messwerts, z.B. eines 4-20mA-Messwerts und/oder die digitale Kommunikation über dieselbe Zweidrahtleitung VL erfolgen.

Bei der ersten Anschlussklemmen A, die als Pluspol dient, handelt es sich um die Energieversorgungsklemme, an die die Energierversorgungseinheit EE des Wireiess Adapters angeschlossen ist. Bei der zweiten Anschlussklemme B handelt es sich um eine erste Kommunikationsklemme, die entweder die digitale Kommunikation entsprechend dem jeweiligen Kommunikationsprotokoll, z.B. dem HART-Protokoll, und/oder die die Ermittlung des analogen Stromsignals, insbesondere eines 4-20 mA-Stromsignals unterstützt.

Zur Sicherstellung des Ex-Schutzes ist zu der Energieversorgungseinheit EE eine Spannungsbegrenzung UB parallel geschaltet. Durch die parallel zur Spannungsquelle U geschaltete Diode D wird eine Gleichspannung bereitgestellt, die maximal die Z-Spannung der Diode D (Sperrrichtung) erreichen kann. Der Betriebsspannung der Diode D in Durchlassrichtung entspricht. Die zweite Anschlussklemme B, die den Minuspol darstellt, weist aus Ex-Schutz-Gründen eine Strombegrenzung IB1 auf. Hier ist der Strom durch den Widerstand R1 begrenzt. Durch die Strom- und Spannungsbegrenzung wird sichergestellt, dass nur eine den Ex-Vorschriften genügende Leistung an den Anschlussklemmen A, B zur Verfügung gestellt wird.

Das analoge Stromsignal und/oder das HART-Signal werden/wird über die Funktionseinheit FE zu einem in der Fig. 1 nicht gesondert dargestellten Mikroprozessor übertragen. Die Funktionseinheit FE unterstützt entweder die digitale Kommunikation, z.B. die HART Kommunikation oder unterstützt die Messung des Stromwertes.

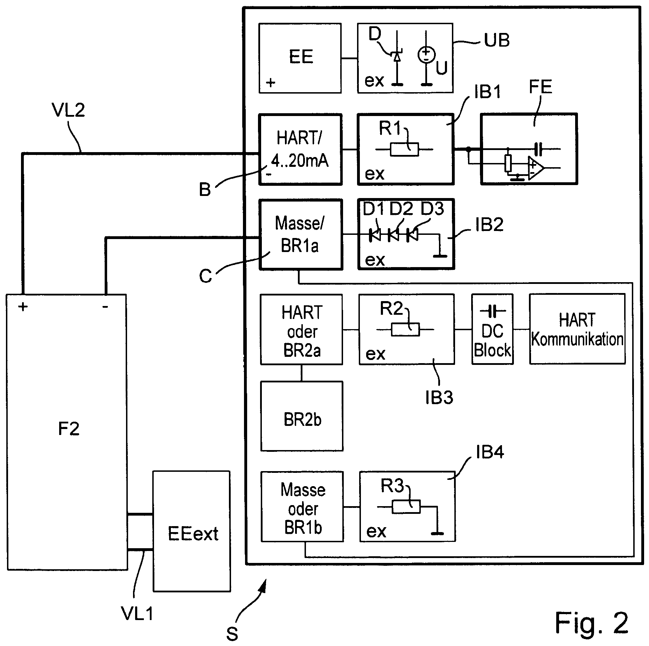

Fig. 2 zeigt die Belegung der Anschlussklemmen A, B, C, Da, Db, E des erfindungsgemäßen Wireless Adapters für den Fall, dass ein Vierdraht-Feldgerät F2 an die Schnittstelle S des Wireless Adapters angeschlossen ist. Über die beiden Verbindungsleitungen VL1 wird das Feldgerät F2 von einer externen Energieversorgungseinheit EEext mit Energie versorgt. Über die beiden Verbindungsleitungen VL2 ist das Feldgerät F2 mit der zweiten Anschlussklemme B und der dritten Anschlussklemme C verbunden. Die Funktion der Anschlussklemme B und der nachgeschalteten Komponenten wurde bereits im Zusammenhang mit der Fig. 1 erläutert. Die Anschlussklemme C hat bei dieser Ausgestaltung die Funktion eines Masseanschlusses für die externe Energieversorgungseinheit EEext. Der maximal fließende Strom ist durch die Strombegrenzung IB1 begrenzt. Ein zusätzicher Verpolschutz besteht aus drei in Reihe geschalteten Dioden D1, D2, D3. Infolge der dreifachen Redundanz ist sichergestellt, dass auch im Falle, dass zwei der drei Dioden ausfallen, die Schutz noch effektiv arbeitet. Die Dioden D1, D2, D3 bewirken weiterhin, dass keine internen Kapazitäten oder Induktivitäten nach außen in Richtung des Feldgeräts F2 wirken. Die hohen Sicherheitsanforderungen der Ex-Schutzart ex-ia sind somit erfüllt.

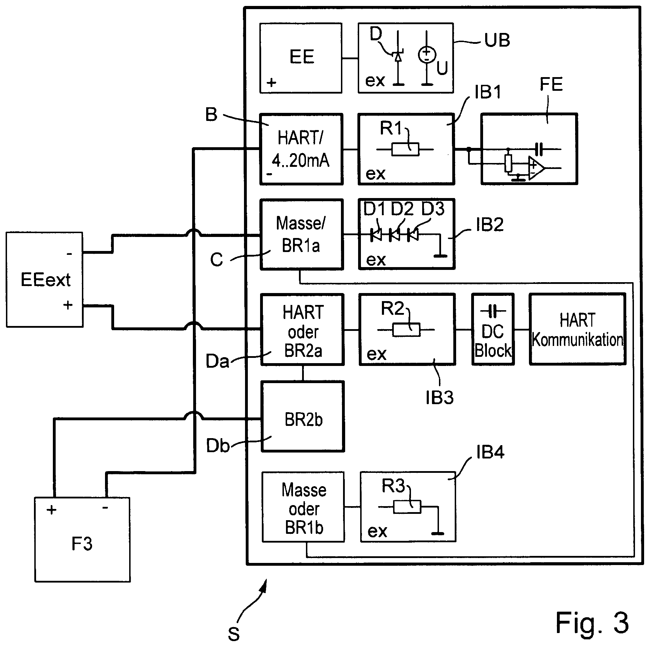

Fig. 3 zeigt Belegung der Anschlussklemmen A, B, C, Da, Db, E des erfindungsgemäßen Wireless Adapters für den Fall, dass ein Zweidraht-Feldgerät F3 und ein externes Netzteil bzw. eine externe Energieversorgungseinheit EEext an den Wireless Adapter angeschlossen sind. Die vierte Anschlussklemme D ist zweifach ausgeführt. Insbesondere arbeiten die beiden Anschlussklemmen Da, Db funktional gleich, da sie über eine Brücke Br2a, Br2b miteinander verbunden sind. Hierbei ist das Zweidraht-Feldgerät F3 an die zweite Anschlussklemme B und an die vierte Anschlussklemme Db angeschlossen. Die externe Energieversorgungseinheit EEext ist mit der dritten Anschlussklemme C und der vierten Anschlussklemme Da verbunden. Die Speisung des Wireless Adapters und des Feldgeräts F3 erfolgt über die externe Energieversorgungseinheit EEext.

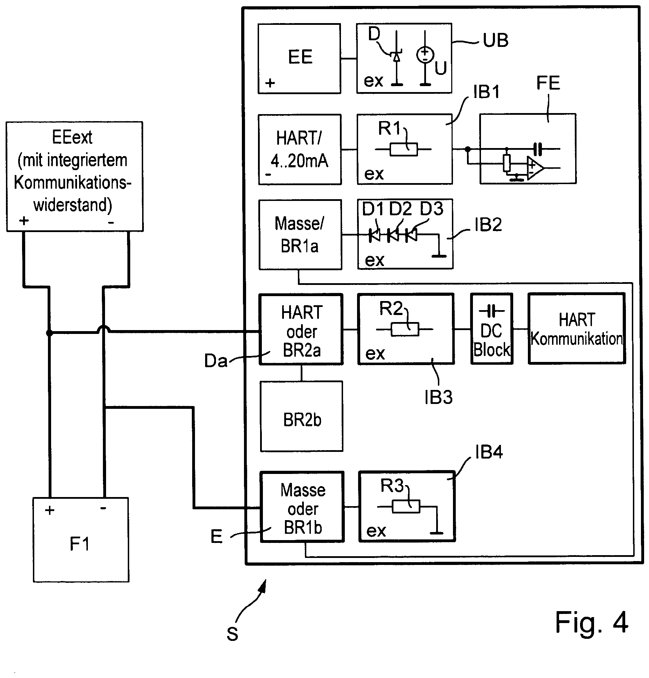

In Fig. 4 ist eine erste Ausgestaltung der Belegung der Anschlussklemmen A, B, C, Da, Db, E des erfindungsgemäßen Wireless Adapters für den Fall dargestellt, dass der Wireless Adapter bei einem Zweidraht-Feldgerät F1 im Modembetrieb arbeitet. Belegt sind bei dieser Ausgestaltung die vierte Anschlussklemme Da und die fünfte Anschlussklemme E. Bei der fünften Anschlussklemme E kann es sich je nach angeschlossener Feldinstallation F1, F2, EEext, BE um einen hochohmiger Masseanschluss - was bei der Feldinstallation der Fig. 4 der Fall ist - oder um eine Brücke Br1 b, Br1a zur dritten Anschlussklemme C handeln.

Für den Fall, dass der Wireless Adapter bei einem Zweidraht-Feldgerät F1 für den Modembetrieb verwendet wird, sind die vierte Anschlussklemme Da und die fünfte Anschlussklemme E über die beiden Kommunikationsleitungen KL auf die Zweidrahtleitung VL aufgeklemmt. Die Zweidrahtleitung VL verbindet das Zweidraht-Feldgerät F1 mit der externen Energieversorgungseinheit EEext und ermöglicht die digitale Kommunikation.

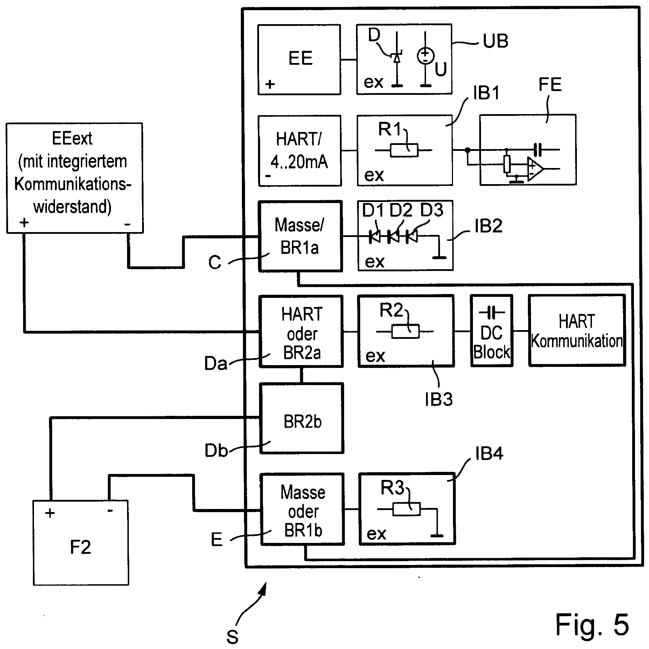

Fig. 5 zeigt eine zweite Ausgestaltung der Belegung der Anschlussklemmen A, B, C, Da, Db, E des erfindungsgemäßen Wireless Adapters für den Fall, dass der Wireless Adapter im Modembetrieb bei einem Vierdraht-Feldgerät F2 arbeitet. Die Energieversorgungseinheit EEext, die das Feldgerät F2 speist, ist separat an den Wireless Adapter angeschlossen. Die Energieversorgungseinheit EEext ist mit der dritten Anschlussklemme C und der vierten Anschlussklemme Da verbunden, wobei hier die dritte Anschlussklemme C und die fünfte Anschlussklemme E über eine Brücke Br1 b, Br1 a miteinander verbunden sind. Das Feldgerät F2 über die vierte Anschlussklemme Db und die fünfte Anschlussklemme E an den Wireless Adapter angeschlossen.

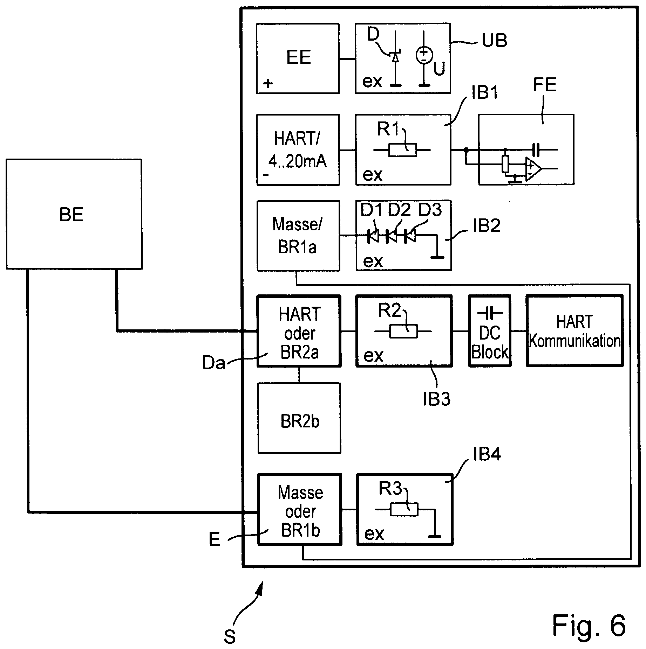

In Fig. 6 ist die Belegung der Anschlussklemmen A, B, C, Da, Db, E des erfindungsgemäßen Wireless Adapters für den Fall dargestellt, dass ein Bediengerät BE an den Wireless Adapter angeschlossen ist. Das Bediengerät BE dient beispielsweise zur Parametrierung des Wireless Adapters. Es kann auch zur Inbetriebnahme oder zu Diagnosezwecken genutzt werden. Das Bediengerät BE ist über die vierte Anschlussklemme Da, also die zweite Kommunikationsklemme, und die fünfte Anschlussklemme E, die als Masseklemme dient, an den Wireless Adapter bzw. an die Schnittstelle des Wireless Adapters angeschlossen.

## Patentansprüche

1. Universelle Schnittstelle (S) für einen Wireless Adapter, der ein in der Automatisierungstechnik gebräuchliches Kommunikationsprotokoll (HART) unterstützt, wobei dem Wireless Adapter eine erste Energieversorgungseinheit (2) zur Energieversorgung des Wireless Adapters und ein Funkmodul (FM) zur Kommunikation mit einer übergeordneten Steuereinheit (ST) über ein Funknetzwerk (FN) zugeordnet sind, wobei an der Schnittstelle (S) zumindest fünf Anschlussklemmen (A, B, C, D, E) vorgesehen sind, die so ausgestaltet sind, dass in Abhängigkeit von der jeweils anzuschließenden Feldinstallation (F1, F2, EEext, BE) jeweils eine Teilmenge der Anschlussklemmen (A, B, C, D, E) entweder mit unterschiedlichen Ausgestaltungen von Feldgeräten (F1, F2) oder mit einem Bediengerät (BE) verbindbar ist oder der Wireless Adapter im Modembetrieb nutzbar ist,
und wobei sich je nach Feldinstallation die Belegung der Anschlussklemmen (A, B, C, D, E) ändert und die einzelnen Anschlussklemmen (A, B, C, D, E) in unterschiedlichen Kombinationen nutzbar sind.

2. Schnittstelle nach Anspruch 1, wobei es sich bei der ersten Anschlussklemme (A) um eine Energieversorgungsklemme handelt, die mit einer Energierversorgungseinheit (EE) verbunden ist.

3. Schnittstelle nach Anspruch 1, wobei es sich bei der zweiten Anschlussklemme (B) um eine erste Kommunikationsklemme handelt, die die digitale Kommunikation entsprechend dem Kommunikationsprotokoll (HART) und/oder die Ermittlung des analogen Stromsignals (4-20 mA) unterstützt.

4. Schnittstelle nach Anspruch 2 oder 3, wobei ein von der Energieversorgungseinheit (EE) des Wireless Adapters gespeistes Zweidraht-Feldgerät (F1), bei dem die Energieversorgung und die Bereitstellung des Messwerts über dieselbe Zweidrahtleitung (VL) erfolgen, an die erste Anschlussklemmen (A) und an die zweite Anschlussklemme (B) anschließbar ist.

5. Schnittstelle nach Anspruch 1, wobei es sich bei der dritten Anschlussklemme (C) je nach anzuschließender Feldinstallation (F1, F2, EEext, BE) um eine Masseklemme für eine externe Energieversorgungseinheit (EEext) oder um eine Brücke (Br1a, Br1 b) handelt, die die Verbindung zur fünften Anschlussklemme (E) herstellt.

6. Schnittstelle nach Anspruch 3 und 5, wobei ein Vierdraht-Feldgerät (F2), das über eine erste Zweidrahtleitung (VL2) und eine externe Energieversorgungseinheit (EEext) mit Energie versorgt ist, über die zweite (B) Anschlussklemme und die dritte Anschlussklemme (C) mit dem Wireless Adapter verbindbar ist, so dass das digitale Kommunikationssignal und/oder das den Messwert repräsentierende Stromsignal über die an der zweiten Anschlussklemme (B) und an der dritten Anschlussklemme (C) des Wireless Adapters angeklemmte zweite Zweidrahtleitung (VL2) übertragbar ist.

7. Schnittstelle nach Anspruch 1, wobei es sich bei der vierten Anschlussklemme (D) um eine zweite Kommunikationsklemme handelt, die die digitale Kommunikation entsprechend dem Kommunikationsprotokoll (HART) unterstützt.

8. Schnittstelle nach Anspruch 7, wobei die vierte Anschlussklemme (D) zweifach ausgeführt ist bzw. wobei die beiden Anschlussklemmen (Da, Db) funktional gleich arbeiten, da sie über eine Brücke (Br2a, Br2b) miteinander verbunden sind.

9. Schnittstelle nach Anspruch 3, 5 oder 7, wobei für den Fall, dass ein Zweidraht-Feldgerät (F1) und eine externe Energieversorgungseinheit (EEext) separat an den Wireless Adapter anzuschließen sind, das Zweidraht-Feldgerät (F1) an die zweite Anschlussklemme (B) und an die vierte Anschlussklemme (Db) angeschlossen ist und dass die externe Energieversorgungseinheit (EEext) mit der dritten Anschlussklemme (C) und der vierten Anschlussklemme (Da) verbunden ist.

10. Schnittstelle nach Anspruch 1, wobei es sich bei der fünften Anschlussklemmen (E) je nach angeschlossener Feldinstallation (F1, F2, EEext, BE) um einen hochohmiger Masseanschluss oder um eine Brücke (Br1 b, Br1a) zur dritten Anschlussklemme (C) handelt.

11. Schnittstelle nach einem oder mehreren der Ansprüche 7 oder 8 und 10, wobei für den Fall, dass der Wireless Adapter bei einem Zweidraht-Feldgerät (F1) für den Modembetrieb verwendet wird, die vierte Anschlussklemme (Da) und die fünfte Anschlussklemme (E) über die beiden Kommunikationsleitungen (KL) auf die Zweidrahtleitung (VL), die das Zweidraht-Feldgerät (F1) mit der externen Energieversorgungseinheit (EEext) verbindet und über die die digitale Kommunikation erfolgt, angeschlossen ist.

12. Schnittstelle nach Anspruch 5, 7 und 10, wobei für den Fall, dass der Wireless Adapter bei einem über die externe Energieversorgungseinheit (EEext) gespeisten Feldgerät (F2) im Modembetrieb arbeitet, die externe Energie-versorgungseinheit (EEext) mit der dritten Anschlussklemme (C) und der vierten Anschlussklemme (Da) verbunden ist, wobei die dritte Anschlussklemme (C) und die fünfte Anschlussklemme (E) über eine Brücke (Br1a, Br1 b) miteinander verbunden sind, und wobei das Feldgerät (F2) über die vierte Anschlussklemme (Db) und die fünfte Anschlussklemme (E) an den Wireless Adapter angeschlossen ist.

13. Schnittstelle nach Anspruch 7 und 10, wobei für den Fall, dass der Wireless Adapter mittels eines Bediengeräts (BE) bedient wird, das Bediengerät (BE) an die vierte Anschlussklemme (Da) und die fünfte Anschlussklemme (E) anschließbar ist.

14. Schnittstelle nach einem oder mehreren der vorhergehenden Ansprüche, wobei jeder der Anschlussklemmen (A, B, C, D, E) entweder eine Spannungsbegrenzung (UB) und/oder Strombegrenzung (IB) zugeordnet ist, die so ausgelegt sind, dass beim Anschluss der jeweiligen Feldinstallation (F1, F2, EEext, BE) an den Wireless Adapter die zur Verfügung stehende Leistung so bemessen ist, dass der Einsatz des Wireless Adapters in Verbindung mit der Feldinstallation (F1, F2, EEext, BE) im explosionsgefährdeten Bereich möglich ist.

15. Schnittstelle nach Anspruch 1, wobei es sich bei dem Kommunikationsprotokoll um das HART-Protokoll, das Profibus Protokoll, oder das Foundation Fieldbus Protokoll handelt.

## Claims

1. Universal interface (S) for a wireless adapter which supports a communication protocol (HART) commonly used in automation engineering, wherein a first energy supply unit (2) for the provision of energy to the wireless adapter and a wireless module (FM) for communicating with a higher-level control unit (ST) via a radio network (FN) are assigned to the wireless adapter, wherein at least five terminals (A, B, C, D, E) are provided at the interface (S), said terminals being designed in such a way that, depending on the field installation to be connected (F1, F2, EEext, BE), a subset of the terminals (A, B, C, D, E) can be connected either to different embodiments of field devices (F1, F2) or to an operating unit (BE), or the wireless adapter can be used in modem mode,
and wherein the assignment of the terminals (A, B, C, D, E) changes depending on the field installation and the individual terminals (A, B, C, D, E) can be used in different combinations.

2. Interface as claimed in Claim 1, wherein the first terminal (A) is an energy supply terminal which is connected to an energy supply unit (EE).

3. Interface as claimed in Claim 1, wherein the second terminal (B) is a first communication terminal that supports digital communication in accordance with the communication protocol (HART) and/or the determination of the analog current signal (4-20 mA).

4. Interface as claimed in Claim 2 or 3, wherein a two-wire field device (F1), which is powered by the energy supply unit (EE) of the wireless adapter where energy is supplied and the measured value is provided via the same two-wire cable (VL), can be connected to the first terminal (A) and the second terminal (B).

5. Interface as claimed in Claim 1, wherein, depending on the field installation to be connected (F1, F2, EEext, BE), the third terminal (C) is a ground terminal for an external energy supply unit (EEext) or a bridge (Br1 a, Br1 b) that establishes the connection to the fifth terminal (E).

6. Interface as claimed in Claim 3 and 5, wherein a four-wire field device (F2) which is supplied with energy via a first two-wire cable (VL2) and an external energy supply unit (EEext) can be connected to the wireless adapter via the second (B) terminal and the third terminal (C) such that the digital communication signal and/or the current signal representing the measured value can be transmitted via the second two-wire cable (VL2) connected to the second terminal (B) and the third terminal (C).

7. Interface as claimed in Claim 1, wherein the fourth terminal (D) is a second communication terminal that supports digital communication according to the communication protocol (HART).

8. Interface as claimed in Claim 7, wherein the fourth terminal (D) is duplicated or wherein the two terminals (Da, Db) are identical in terms of function as they are interconnected via a bridge (Br2a, Br2b).

9. Interface as claimed in Claim 3, 5 or 7, wherein if a two-wire field device (F1) and an external energy supply unit (EEext) are to be connected separately to the wireless adapter, then the two-wire field device (F1) is connected to the second terminal (B) and to the fourth terminal (Db) and the external energy supply unit (EEext) is connected to the third terminal (C) and the fourth terminal (Da).

10. Interface as claimed in Claim 1, wherein, depending on the field installation connected (F1, F2, EEext, BE), the fifth terminal (E) is a high-impedance ground connection or a bridge (Br1 b, Br1 a) to the third terminal (C).

11. Interface as claimed in one or more of Claims 7 or 8 and 10, wherein, if the wireless adapter is used for the modem mode in the case of a two-wire field device (F1), the fourth terminal (Da) and the fifth terminal (E) are connected via the two communication lines (KL) to the two-wire cable (VL), which connects the two-wire field device (F1) to the external energy supply unit (EEext) and via which digital communication takes place.

12. Interface as claimed in Claim 5, 7 and 10, wherein, if the wireless adapter operates in modem mode in the case of a field device (F2) that is powered via the external energy supply unit (EEext), the external energy supply unit (EEext) is connected to the third terminal (C) and the fourth terminal (Da), wherein the third terminal (C) and the fifth terminal (E) are interconnected via a bridge (Br1a, Br1b), and wherein the field device (F2) is connected to the wireless adapter via the fourth terminal (Db) and the fifth terminal (E).

13. Interface as claimed in Claim 7 and 10, wherein, if the wireless adapter is operated using an operating device (BE), the operating device (BE) can be connected to the fourth terminal (Da) and the fifth terminal (E).

14. Interface as claimed in one or more of the previous claims, wherein each of the terminals (A, B, C, D, E) is assigned either a voltage limitation (UB) and/or a current limitation (IB), which are designed in such a way that when the field installation (F1, F2, EEext, BE) is connected to the wireless adapter the level of power provided is such that it is possible to use the wireless adapter in conjunction with the field installation (F1, F2, EEext, BE) in the explosion hazardous area.

15. Interface as claimed in Claim 1, wherein the communication protocol is the HART protocol, the Profibus protocol or the Foundation Fieldbus protocol.

## Revendications

1. Interface universelle (S) destinée à un adaptateur sans fil, qui prend en charge un protocole de communication (HART) courant dans la technique d'automatisation, une première unité d'alimentation en énergie (2) étant attribuée à l'adaptateur sans fil, pour l'alimentation en énergie de l'adaptateur sans fil, et un module radio (FM) pour la communication avec une unité de commande maître (ST) via un réseau radio (FN), au moins cinq bornes de raccordement (A, B, C, D, E) étant prévues sur l'interface (S), lesquelles bornes sont conçues de telle sorte qu'en fonction de l'installation de terrain (F1 F2, EEext, BE) à raccorder, un sous-ensemble des bornes de raccordement (A, B, C, D, E) peut être relié avec différentes configurations d'appareils de terrain (F1, F2) ou avec un appareil de commande (BE), ou l'adaptateur sans fil peut être utilisé en mode modem,
et pour laquelle l'occupation des bornes de raccordement (A, B, C, D, E) change selon l'installation de terrain, et les différentes bornes de raccordement (A, B, C, D, E) peuvent être utilisées dans différentes combinaisons.

2. Interface selon la revendication 1, pour laquelle il s'agit, concernant la première borne de raccordement (A), d'une borne d'alimentation en énergie qui est reliée avec l'unité d'alimentation en énergie (EE).

3. Interface selon la revendication 1, pour laquelle il s'agit, concernant la deuxième borne de raccordement (B), d'une première borne de communication qui prend en charge la communication numérique selon le protocole de communication (HART) et/ou la détermination du signal de courant analogique (4-20 mA).

4. Interface selon la revendication 2 ou 3, pour laquelle un appareil de terrain (F1) bifilaire, alimenté par l'unité d'alimentation en énergie (EE) de l'adaptateur sans fil, appareil de terrain pour lequel l'alimentation en énergie et la mise à disposition de la valeur mesurée s'effectuent sur la même ligne bifilaire (VL), peut être relié à la première borne de raccordement (A) et à la deuxième borne de raccordement (B).

5. Interface selon la revendication 1, pour laquelle il s'agit, concernant la troisième borne de raccordement (C), selon l'installation de terrain (F1, F2, EEext, BE) à raccorder, d'une borne de masse pour une unité d'alimentation en énergie externe (EEext) ou d'un pont (Br1a, Br1b), qui établit la liaison avec la cinquième borne de raccordement (E).

6. Interface selon la revendication 3 et 5, pour laquelle un appareil de terrain quadrifilaire (F2), qui est alimenté en énergie via une première ligne bifilaire (VL2) et une unité d'alimentation en énergie externe (EEext), peut être relié avec l'adaptateur sans fil via la deuxième borne de raccordement (B) et la troisième borne de raccordement (C), de telle sorte que le signal de communication numérique et/ou le signal de courant représentant la valeur mesurée peut être transmis via la deuxième ligne bifilaire (VL2) raccordée à la deuxième borne de raccordement (B) et à la troisième borne de raccordement (C) de l'adaptateur sans fil.

7. Interface selon la revendication 1, pour laquelle il s'agit, concernant la quatrième borne de raccordement (D), d'une deuxième borne de communication qui prend en charge la communication numérique conformément au protocole de communication (HART).

8. Interface selon la revendication 7, pour laquelle la quatrième borne de raccordement (D) est doublée et pour laquelle les deux bornes de raccordement (Da, Db) sont identiques d'un point de vue du fonctionnement, étant donné qu'elles sont reliées entre elles par un pont (Br2a, Br2b).

9. Interface selon la revendication 3, 5 ou 7, pour laquelle, pour le cas où un appareil de terrain bifilaire (F1) et une unité d'alimentation en énergie externe (EEext) doivent être raccordés séparément à l'adaptateur sans fil, l'appareil de terrain bifilaire (F1) est raccordé à la deuxième borne de raccordement (B) et à la quatrième borne de raccordement (Db), et l'unité d'alimentation en énergie externe (EEext) est reliée avec la troisième borne de raccordement (C) et la quatrième borne de raccordement (Da).

10. Interface selon la revendication 1, pour laquelle il s'agit, concernant la cinquième borne de raccordement (E), selon l'installation de terrain (F1, F2, EEext, BE) raccordée, d'une connexion de masse de haute impédance ou d'un pont (Br1 b, Br1 a) avec la troisième borne de raccordement (C).

11. Interface selon l'une ou plusieurs des revendications 7 ou 8 et 10, pour laquelle, pour le cas où l'adaptateur sans fil est utilisé dans le cas d'un appareil de terrain bifilaire (F1) pour le mode modem, la quatrième borne de raccordement (Da) et la cinquième borne de raccordement (E) sont raccordées par l'intermédiaire des deux lignes de communication (KL) sur le câble bifilaire (VL), qui relie l'appareil de terrain bifilaire (F1) avec l'unité d'alimentation en énergie externe (EEext) et par l'intermédiaire duquel s'effectue la communication numérique.

12. Interface selon la revendication 5, 7 et 10, pour laquelle, pour le cas où l'adaptateur sans fil fonctionne en mode modem dans le cas d'un appareil de terrain (F2) alimenté via l'unité d'alimentation en énergie externe (EEext), l'unité d'alimentation en énergie externe (EEext) est interconnectée avec la troisième borne de raccordement (C) et la cinquième borne de raccordement (E) par l'intermédiaire d'un pont (Br1 a, Br1 b), et pour laquelle l'appareil de terrain (F2) est raccordé à l'adaptateur sans fil via la quatrième borne de raccordement (Db) et la cinquième borne de raccordement (E).

13. Interface selon la revendication 7 et 10, pour laquelle, pour le cas où l'adaptateur sans fil est utilisé au moyen d'un appareil de commande (BE), l'appareil de commande (BE) peut être raccordé à la quatrième borne de raccordement (Da) à et la cinquième borne de raccordement (E).

14. Interface selon l'une ou plusieurs des revendications précédentes, pour laquelle chacune des bornes de raccordement (A, B, C, D, E) se voit attribuer une limitation de tension (UB) et/ou une limitation de courant (IB), qui est/sont conçue(s) de telle sorte que lors du raccordement de l'installation de terrain (F1, F2, EEext, BE) respective à l'adaptateur sans fil, la puissance disponible est dimensionnée de telle sorte que l'utilisation de l'adaptateur sans fil soit possible en liaison avec l'installation de terrain (F1, F2, EEext, BE) dans la zone à atmosphère explosible.

15. Interface selon la revendication 1, pour laquelle il s'agit, concernant le protocole de communication, du protocole HART, du protocole Profibus ou du protocole Foundation Fieldbus.
